# EUROPEAN PATENT SPECIFICATION

(11) **EP 0 893 909 B1**
(45) Date of publication and mention of the grant of the patent: **09.08.2006**
(21) Application number: 98305883.5
(22) Date of filing: 23.07.1998
(51) Int. Cl.: H04N 1/29

(54) **Image forming device**
Bilderzeugungsgerät
Dispositif de formation d'image

(30) Priority: 23.07.1997 KR 9734388
(43) Date of publication of application: 27.01.1999
(73) Proprietor: SAMSUNG ELECTRONICS CO., LTD., Suwon-City, Kyungki-do (KR)
(72) Inventor: Byeon, Sang-Hyeon, Kiheung-Eup, Yongin, Kyonggi-Do (KR); An, Seung-Deok, Suji-Eup, Yongin, Kyonggi-Do (KR); Kim, Nam-Ryong, Kwonsun-Gu, Suwon, Kyonggi-Gu (KR); Shin, Kyu-Cheol, Kwachun, Kyonggi-Do (KR)
(74) Representative: Boakes, Jason Carrington

(56) References cited:
- EP-A- 0 804 014
- PATENT ABSTRACTS OF JAPAN vol. 1997, no. 09, 30 September 1997 (1997-09-30) & JP 09 127757 A (CANON INC), 16 May 1997 (1997-05-16)
- PATENT ABSTRACTS OF JAPAN vol. 1997, no. 10, 31 October 1997 (1997-10-31) & JP 09 160364 A (RICOH CO LTD), 20 June 1997 (1997-06-20)
- PATENT ABSTRACTS OF JAPAN vol. 1997, no. 11, 28 November 1997 (1997-11-28) & JP 09 197893 A (CANON INC), 31 July 1997 (1997-07-31)
- PATENT ABSTRACTS OF JAPAN vol. 017, no. 010 (P-1466), 8 January 1993 (1993-01-08) & JP 04 240886 A (NIHON EREKUTORONIKUSU KOUGIYOU KK), 28 August 1992 (1992-08-28)

## Description

The present invention relates to an image forming device and, more particularly, to an image forming device such as a laser printer, and a method of operation, for forming an image on a recordable medium..

US 5724627 discloses an image forming device for forming an image on a recordable medium such as a sheet of paper. Present image data is used to determine an amount of toner which must be replenished for the next image.

Conventionally, in an electrophotographic image forming device such as a copier, a colour copier, a colour printer, an optical density device, etc. a charging roller rotates and evenly charges a photosensitive surface which is spread over the outer periphery of a drum, to a high voltage.

A laser beam is transmitted from an exposing unit, onto the charged photosensitive body, so as to form an electrostatic latent image. A laser source may include a laser diode, used to convert a digital signal into the laser beam.

The electrostatic latent image formed on the photosensitive drum is then developed by adding a toner and passing through a developer to change the latent image to a visible image. The visible image is transferred onto a recordable medium, such as paper, which is transported and fed by a pickup roller. The visible image transferred onto the recordable medium is then fixed onto the recordable medium by heat and pressure of a fixing unit, and the recordable medium is then output from the image forming device, carrying the printed image.

When power is applied to the image forming device, a warm-up step is performed during a predetermined time, according to the characteristics of the device. After completing the warm-up step, an on-line mode is set, and the device is then capable of performing a print command. If a print command is not received within a pre-set time in the on-line mode, the device is placed in a standby mode. When a print command is received in the standby mode, a warm-up step is performed before the printing operation is performed.

The aforesaid conventional image forming device has the following problems.

First, in fixing the toner transferred onto the recordable medium, the fixing temperature of the fixing unit is not controlled according to the amount of toner transferred onto the recordable medium. Instead, the fixing temperature varies according to the kind of the recordable medium such as a normal paper or a transparent paper.

In the case that a large amount of toner is transferred onto the recordable medium, the large amount of toner to be fixed causes a variation in the temperature of the fixing unit, thereby degrading the print quality.

Second, when transferring the toner onto the recordable medium, the electric potential of the transferring voltage is predetermined. If a large amount of toner is transferred onto the recordable medium, the predetermined electric potential may be insufficient for effective transfer of toner, a poor transfer of toner occurs and the print quality is thereby degraded.

It is an aim of the present invention to at least partly overcome the above-mentioned problems.

According to a first aspect of the present invention there is provided a method of operating an image forming device to form images using toner, comprising the steps of:
providing bitmapped image data corresponding to an image; and
estimating (S1-S3; S6-S8) an amount of toner to be used in forming said image responsive to said image data; characterised by
selecting a value (S5; S10) for at least one of a fixing temperature and/or a transfer voltage of the image forming device responsive to the estimated amount of toner to be used;
setting the fixing temperature and/or transfer voltage at said respective selected value; and
printing the image data as said image with said fixing temperature and/or transfer voltage set at the respective selected value.

According to a second aspect of the present invention there is provided an image forming device for forming images using toner, comprising:
means for providing bitmapped image data corresponding to an image; and
means (2, 3) for estimating an amount of toner to be used in forming said image responsive to said image data and; characterised by
means (7; 30) for selecting a value for at least one of a fixing temperature and/or a transfer voltage of the image forming device responsive to the estimated amount of toner to be used;
means for setting the fixing temperature and/or transfer voltage at said respective selected value; and
said device is arranged to print the image data as said image with said fixing temperature and/or transfer voltage set at a respective selected value.

The advantages and characteristics of the present invention will become apparent by reference to the following detailed description of certain embodiments, given by way of examples only, in conjunction with the accompanying drawings in which:
FIG. 1 is a block diagram illustrating an embodiment of an image forming device according to the present invention;
FIG. 2 is a table illustrating data stored in a memory shown in FIG. 1;
FIG. 3 is a structural view roughly illustrating a printer engine shown in FIG. 1;
FIG. 4 is a detailed structural view of a transfer unit shown in FIG. 3;
FIG. 5 is a flowchart illustrating an operation of each component part shown in FIG. 1;
FIG. 6 is a block diagram illustrating another embodiment of an image forming device according to the present invention;
FIG. 7 is a table illustrating data stored in a memory shown in FIG. 6; and
FIG. 8 is a flowchart illustrating an operation of each component part shown in FIG. 6.

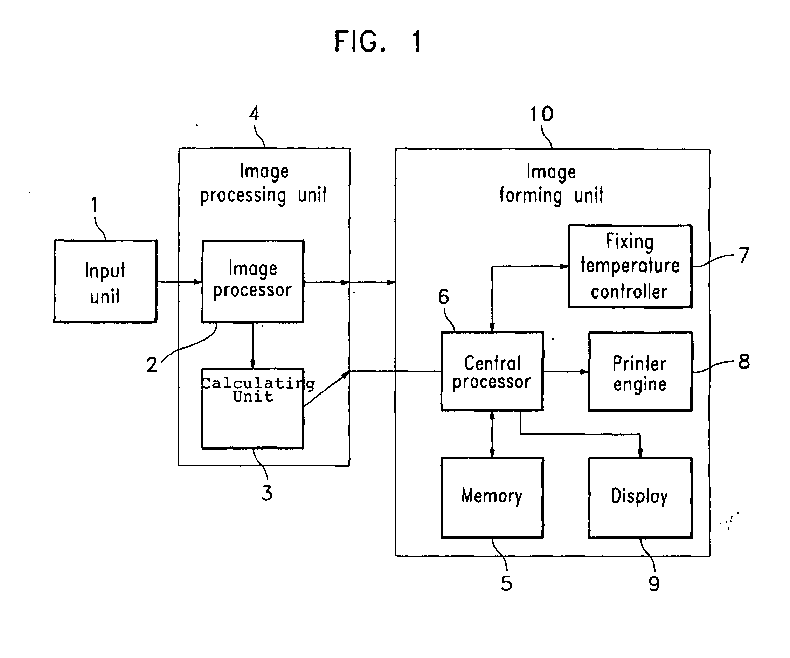

Referring to FIG. 1, the image forming device includes an input unit 1 for inputting print information; an image processing unit 4; and an image forming unit 10.

The image processing unit 4 includes an image processor 2 for converting the print information from the input unit 1 into bitmapped image data, and a calculating unit 3 for calculating the size of the bitmapped image data.

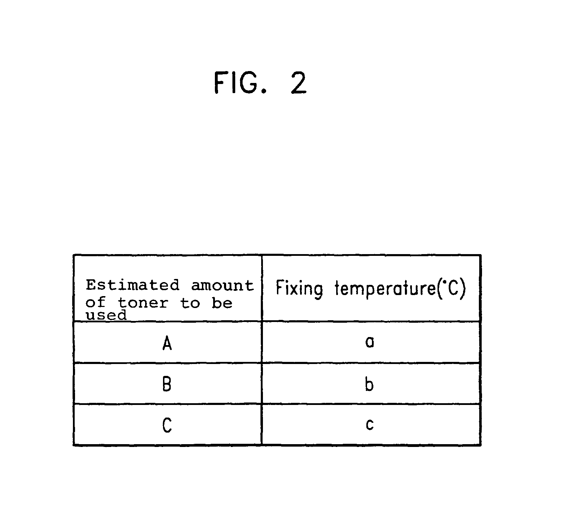

The image forming unit 10 includes: a memory 5 for storing a table relating fixing temperature values according to an estimated amount of toner to be used; a central processor 6 for estimating the amount of toner to be used, from the size of the image data as calculated by the image processing unit 4, retrieving a fixing temperature value corresponding to the calculated amount of toner to be used from the memory 5 and outputting a control signal for controlling the fixing temperature accordingly; a fixing temperature controller 7 for controlling the fixing temperature of a fixing unit (not shown) according to the control signal from the central processor 6; a printer engine 8 for printing the bitmapped image data transmitted from the central processor 6 as an image; and a display 9 for displaying the operation state of the system according to various control signals from the central processor 6. FIG. 2 shows fixing temperature values according to the calculated estimated amount of toner to be used, as stored in form of table in the memory 5. Increasing estimated amounts of toner to be used correspond to increasing fixing temperatures.

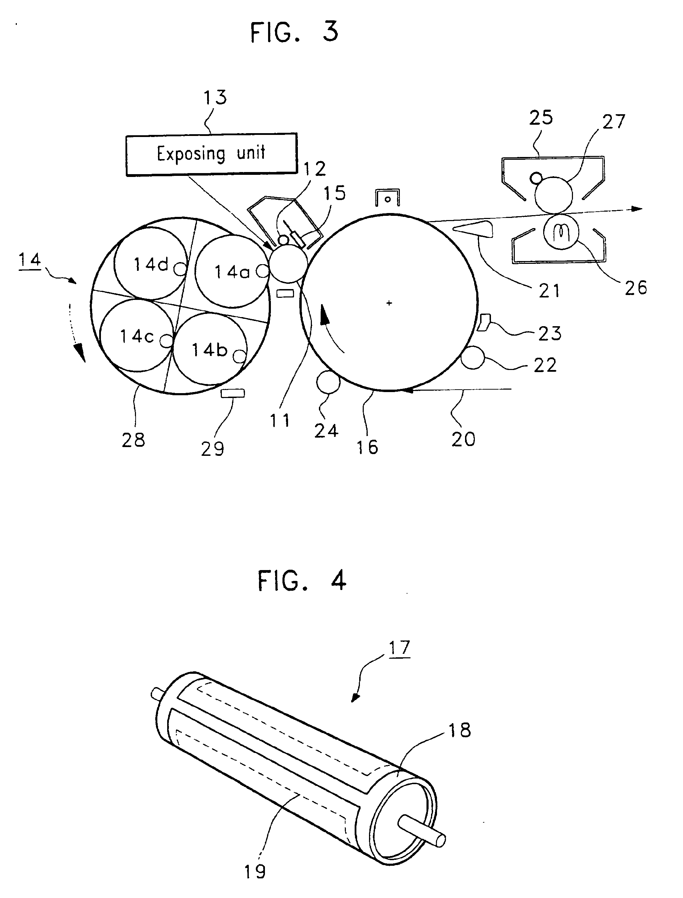

FIG. 3 shows the structure of the printer engine 8. A photosensitive drum 11 is supported by a rotary body (not shown). The photosensitive drum is covered with a photosensitive body having a thin photosensitive layer spread on a conductive plate. The photosensitive drum 11 is arranged so as to be rotatably operated by a driving unit (not shown).

Around the photosensitive drum 11 are provided a charging unit 12 for charging the surface of the photosensitive drum 11 with a certain electric potential; an exposing unit 13 for forming an electrostatic latent image by radiating light such as laser light from a laser diode, on the surface of the photosensitive drum 11; a developing unit 14 and a first cleaning unit 15 for removing remaining toner from the surface of the photosensitive drum 11.

Developing unit 14 is rotated in contact with the photosensitive drum 11. An even pressure is applied, and the developer repeatedly forms four colour toner images, i.e. visible images successively formed according to the electrostatic latent image formed on the surface of the photosensitive drum 11.

In addition, a transfer unit 16 includes a rotatable transfer drum 17 (FIG. 4). The transfer drum 17 is rotated, in contact with the photosensitive drum 11 with a predetermined pressure.

FIG. 4 shows the transfer drum 17 used in the transfer unit 16. The transfer unit includes a transfer cylinder 18 and a dielectric sheet 19, such as a sheet of a PET or a PVDF attached to the transfer cylinder 18.

A transferable medium, i.e. a recordable medium 20, is attached on the surface of the transfer drum 17, electrostatically or mechanically. By applying a transfer voltage on the transfer cylinder 18 of the transfer drum 17, the toner image which is formed on the photosensitive body of the photosensitive drum 11 is transferred onto the recordable medium 20.

A paper separating finger 21 is located at the upper part of the transfer drum 17. When the transferring operation is completed, an edge of the separating finger 21 in contact with the surface of the transfer drum 17 separates the recordable medium 20 from the transfer drum 17. At a position facing the transfer drum 17, a second cleaning unit 23 is located so as to clean the surface of the transfer drum 17 after transfer. In addition, an anti-electrostatic unit 22 is formed at a position facing the transfer drum 17 to eliminate the static electricity (charges) from the transfer drum 17, which finishes the transfer operation.

A adhesion roller 24 is located adjacent to a point where the recordable medium 20 enters the image forming device so as to press the recordable medium into contact with the transfer drum 17. It applies an adhering voltage to the transfer drum 17 so that the recordable medium 20 adheres to the transfer drum 17.

The recordable medium 20 separated from the transfer drum 17 passes through a fixing unit 25 between a heat roller 26 and a pressing roller 27. The toner image is thereby fixed onto the recordable medium 20.

The developing unit 14 includes: a rotatable turret; four developers 14a to 14d which each respectively contain a yellow toner, a magenta toner, a cyan toner and a black toner; and a developer supporting body 28 of a cylindrical shape which supports the four developers.

The turret of the rotatable developing unit 14 is rotated in a certain direction and the developers 14a to 14d move so as to sequentially face the surface of the photosensitive drum 11, thereby forming the electrostatic latent image on the surface of the photosensitive drum 11. By rotating the developer supporting body 28 by one full rotation, and passing the recordable medium around the transfer unit four times, the aforesaid four colours are developed.

At the lower part of the developing unit 14, a remaining toner amount sensor 29 is provided for detecting the toner amount remaining in each developer 14a to 14d of the developing unit 14.

The remaining toner amount sensor 29 includes a light emitting element for transmitting light to the developer being measured, at a predetermined angle; a light receiving element for receiving light reflected by the developer being measured; and a holder for supporting the light emitting element and the light receiving element. The amount of light reflected is converted into an electrical signal corresponding to the quantity of light reflected, and therefore to the amount of toner remaining.

In the image forming device having the above-described structure, the recordable medium 20 which is fed and transported by a pickup roller of a feeding unit (not shown)is adhered to the surface of the dielectric sheet 19 of the transfer drum 17 by the adhesion voltage of the adhesion roller. The charging unit 12 charges the surface of the rotating photosensitive drum 11 with a predetermined electric potential, and the exposing unit including a light source such as a laser diode, exposes an image of a first colour, e.g. yellow, based on the image information and then forms an electrostatic latent image corresponding to the yellow colour on the photosensitive body of the photosensitive drum 11. The developers 14a to 14d are successively carried into contact with the surface of the photosensitive drum 11 by suitably rotating the turret of the rotatable developing unit 14.

An electrostatic latent yellow image formed on the surface of the photosensitive drum 11 is developed by the yellow toner of developer 14a, and thereby a visible yellow image is formed on the photosensitive drum 11.

The visible yellow image generated by the toner image from the developing unit 14a is rotated to a position facing the transfer drum 17 of the transfer unit 16, i.e. into a developing position. The visible, yellow toner image is rotated and transferred onto the recordable medium 20 which is adhered to the dielectric sheet 19 of the transfer drum 17 by the transfer voltage applied to the transfer cylinder 18.

Any yellow toner remaining on the surface of the photosensitive drum 11 is removed by the first cleaning unit 15, and the photosensitive drum 11 returns to a state capable of forming an image corresponding to the next colour.

As an electrostatic latent image of a second colour, e.g. magenta, is formed on the photosensitive drum 11, the turret of the rotatable developing unit 14 is rotated, so as to carry the next developer 14d, corresponding to magenta, to a position facing the surface of the photosensitive drum 11.

The electrostatic latent magenta image formed on the surface of the photosensitive drum 11 becomes the visible magenta image by developing with toner of the second colour, magenta, by the developer 14d by the aforesaid method. The magenta toner image is transferred by the transferring voltage of the transfer cylinder 18, onto the surface of the recordable medium 20, onto which the yellow colour was previously transferred in a previous rotation of transfer cylinder 18.

After the toner images of all four colours have been transferred onto the surface of the recordable medium 20 using the described process, the separating finger 21 is used to separate the recordable medium 20 from the transfer unit 16.

The toner images of all four colours are fixed onto the recordable medium 20 by heating to a predetermined temperature by the heat roller 26 of the fixing unit 25, and the recordable medium 20 is ejected to a paper eject orifice (not shown), thereby completing the printing operation.

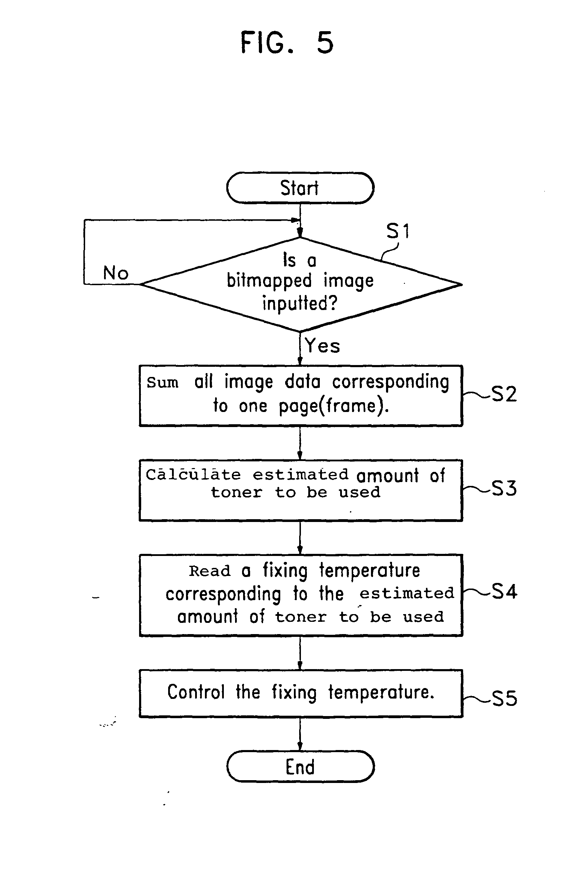

The operation of one embodiment of an image forming device according to a first aspect of the present invention having the above-described structure is explained, with reference to FIG. 5.

First, in step S1, the image forming device detects whether coded print information is input to the image processing unit 4 through the input unit 1, and converts the print information into bitmapped image data by the image processor 2.

Afterwards, in step S2 the calculating unit 3 adds, or sums, all the image data corresponding to one page, i.e. frame. In step S3, the calculating unit 3 accordingly calculates an estimated amount of toner to be used.

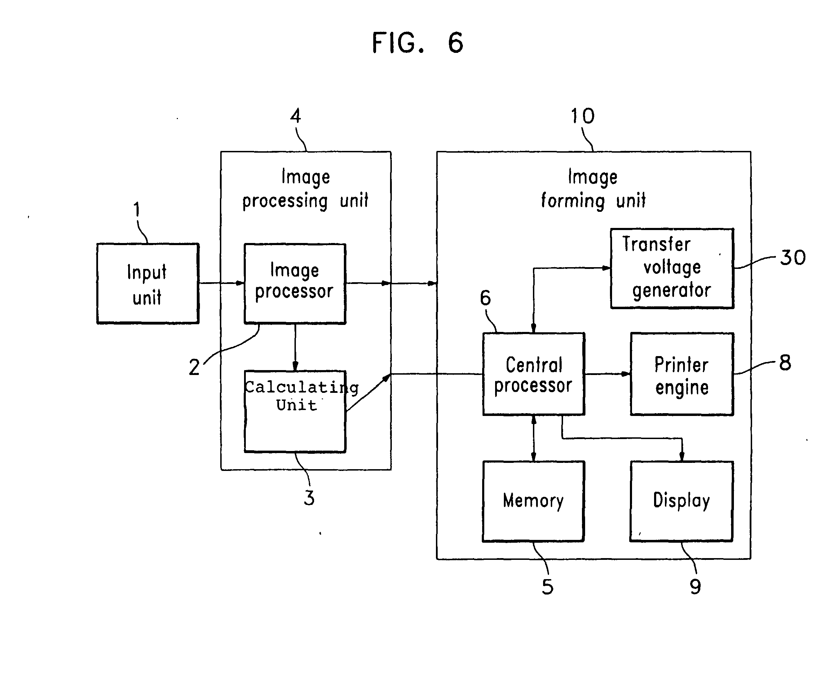

In step S4, the estimated amount of toner to be used is transmitted to the central processor 6, and the central processor 6 reads a corresponding fixing temperature from the memory 5. In step S5, the heating of the fixing unit 25 is controlled according to the fixing temperature read. As a result, effective fixing can be achieved, as the fixing temperature may be adapted for optimally fixing the amount of toner used. FIG. 6 is a block diagram illustrating another embodiment of the image forming device according to the present invention. This figure is similar to FIG. 1, and corresponding reference numerals indicate corresponding parts or features.

Referring to FIG. 6, the structures of the input unit 1 and the image processing unit 4 are the same as in FIG. 1. The image forming unit 10 includes: a memory 5 for storing a table of transfer voltage values according to the estimated amounts of toner to be used; the central processor 6 for calculating an estimated amount of toner to be used, from the size of the bitmapped image data supplied by the image processing unit 4, reading a transfer voltage from the table stored in the memory 5, and outputting a control signal for accordingly controlling the transfer voltage; a transfer voltage generator 30 which controls the transfer voltage of the transfer unit in accordance with the control signal output from the central processor 6; the printer engine 8 for printing bitmapped image data transmitted from the central processor 6 as image information; and the display 9 for displaying the operation state of the system according to various control signals from the central processor 6.

The structure of the printer engine 8 is similar to that of the printer engine 8 previously illustrated in FIG. 3.

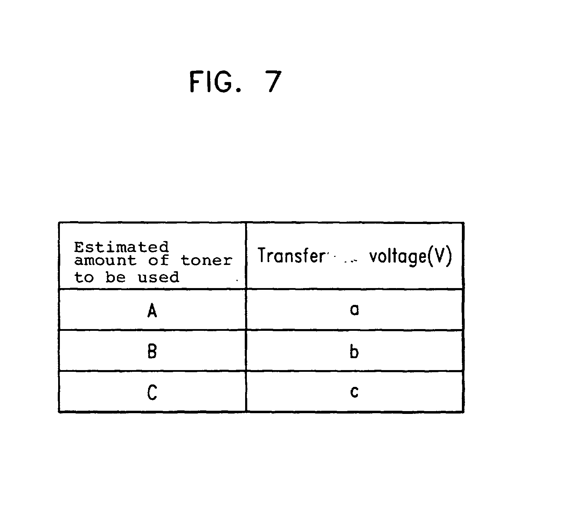

FIG. 7 shows a table of transfer voltage values according to the estimated amount of toner consumed as stored in the memory 5. As the estimated amount of toner consumed increases, the transferring voltage level also increases.

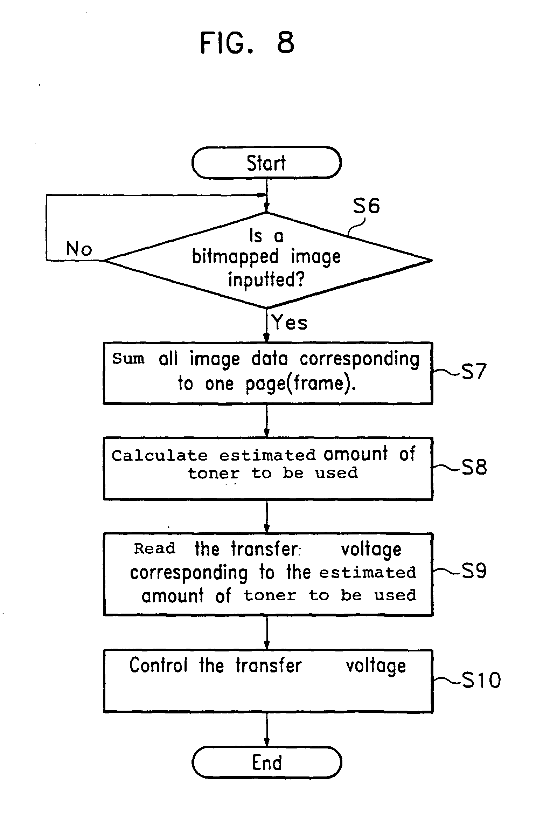

The operation of the image forming device according to the second embodiment of the present invention, as described, is explained with reference to FIG. 8.

In step S6, the image forming device detects whether print information is input to the image processing unit 4 through the input unit 1, and is converted into bitmapped image data by the image processor 2.

In step S7, the calculating units adds, or sums, all the bitmap image data corresponding to one page, i.e. frame.

At step S8 the calculating unit accordingly calculates the estimated amount of toner consumed.

At step S9 the estimated amount of toner to be used is transmitted to the central processor 6 and the central processor 6 reads a transfer voltage value corresponding to the estimated amount of toner to be used from the memory 5.

In step S10, a transfer voltage value is supplied to the transfer unit 16 according to the transfer voltage read from memory 5. As a result, the transfer voltage is adapted according to the estimated amount of toner to be transferred, and efficient transfer of toner is thereby assured.

With regard to both first and second embodiments of the invention as described, as the image data is firstly transferred into a bitmap, the simple operation of summing all bit values in the bitmap provides an accurate estimation of the amount of toner that will be used when the bitmap image data is developed. By summing together the four bitmap sums corresponding to each of the four colours used in a colour image forming device, an estimate of the total amount of toner used in printing a colour image may be obtained. The image forming device according to the present invention has the following benefits.

According to the first embodiment of the invention, by estimating the amount of toner which is transferred onto the recordable medium, and correspondingly controlling the fixing temperature of the fixing unit, poor fixing is prevented and an optimum print state can be maintained.

According to the second embodiment of the invention, by estimating the amount of toner to be transferred onto the recordable medium, and accordingly controlling the transfer voltage, the transfer is optimised and an optimum print state can be maintained.

In a further embodiment of the invention, the advantages of both first and second described embodiments of the invention are combined, and both the fixing temperature and the transfer voltage are controlled according to the estimated amount of toner to be used.

While there have been illustrated and described certain embodiments of the present invention, it will be understood by those skilled in the art that various changes and modifications may be made without departing from the scope of the present invention as defined in the appended claims. For example, the present invention may be adapted for use with monochrome printers, by simply summing bitmap data corresponding to the single colour used, and controlling the fixing temperature and/or the transfer voltage accordingly.

## Claims

1. A method of operating an image forming device to form images using toner, comprising the steps of:
providing bitmapped image data corresponding to an image; and
estimating (S1-S3; S6-S8) an amount of toner to be used in forming said image responsive to said image data; **characterised by**
selecting a value (S5; S10) for at least one of a fixing temperature and/or a transfer voltage of the image forming device responsive to the estimated amount of toner to be used;
setting the fixing temperature and/or transfer voltage at said respective selected value; and
printing the image data as said image with said fixing temperature and/or transfer voltage set at the respective selected value.

2. A method according to claim 1, wherein the amount of toner to be used is estimated by a method comprising the steps of:
providing bitmapped image data corresponding to said image, in bitmap format;
summing (S2; S7) all bit values of the bitmapped image data; and
estimating the amount of toner to be used in accordance with the summed bitmapped image data.

3. A method according to claim 1, for forming colour images from a plurality of coloured toners (14a-14d), wherein the amount of toner to be used is estimated by a method comprising the steps of:
for each of the plurality of coloured toners, providing (2) bitmapped image data corresponding to the part of said image to be formed from that coloured toner, in bitmap format;
summing (3; S2; S7) the bitmapped image data for each of the plurality of coloured toners to provide summed bitmapped image data for the whole of said image; and
estimating a total amount of toner to be used in accordance with the summed bitmap data wherein the fixing temperature is set at a value responsive to said total amount.

4. A method according to claim 1 or claim 3 for forming colour images from a plurality of coloured toners (14a-14d), wherein the amount of toner to be used is estimated by a method comprising the steps of:
for each of the plurality of coloured toners, providing (2) bitmapped image data corresponding to the part of said image to be formed from that coloured toner, in bitmap format;
summing (3; S2; S7) the bitmapped image data for each of the plurality of coloured toners to provide summed bitmapped image data for each colour for the whole of said image ; and
for each colour estimating the amount of respective toner to be used in accordance with the respective summed bitmap data for each colour; and for each colour setting the transfer voltage of said image forming device at a value responsive to the estimated amount of respective toner.

5. A method according to any preceding claim wherein an increased estimated amount of toner to be used causes an increase in fixing temperature of the image forming device.

6. A method according to any preceding claim wherein an increased estimated amount of toner to be used causes an increase in transfer voltage of the image forming device.

7. A method according to any preceding claim wherein a table is formed in a memory (5), and the estimated amount of toner to be used (A, B, C) is used to access and read a corresponding value (a, b, c) of the at least one operating parameter from the table.

8. A method according to claim 2, 3 or 4 and any claim dependent therefrom wherein image data is supplied (1) to the image forming device, and is converted by an image processor (2) into the bitmap format.

9. An image forming device for forming images using toner, comprising:
means for providing bitmapped image data corresponding to an image; and
means (2, 3) for estimating an amount of toner to be used in forming said image responsive to said image data and; **characterised by**
means (7; 30) for selecting a value for at least one of a fixing temperature and/or a transfer voltage of the image forming device responsive to the estimated amount of toner to be used;
means for setting the fixing temperature and/or transfer voltage at said respective selected value; and
said device is arranged to print the image data as said image with said fixing temperature and/or transfer voltage set at a respective selected value.

10. An image forming device according to claim 9 wherein said image is formed on a recordable medium (20) in the form of a sheet.

## Patentansprüche

1. Verfahren zum Betreiben einer Bilderzeugungsvorrichtung zum Erzeugen von Bildern unter Verwendung von Toner, das die folgenden Schritte umfasst:
Bereitstellen von Bitmapping unterzogenen Bilddaten, die einem Bild entsprechen; und
Schätzen (S1-S3; S6-S8) einer Menge an Toner, die bei der Erzeugung des Bildes zu verwenden ist, in Reaktion auf die Bilddaten; **gekennzeichnet durch**:
Auswählen eines Wertes (S5; S10) für wenigstens eine Fixiertemperatur und/oder eine Übertragungsspannung der Bilderzeugungsvorrichtung in Reaktion auf die geschätzte Menge an Toner, die zu verwenden ist;
Einstellen der Fixiertemperatur und/oder der Übertragungsspannung auf den jeweiligen ausgewählten Wert; und
Drucken der Bilddaten als das Bild mit der Fixiertemperatur und/oder der Übertragungsspannung, die auf den jeweiligen ausgewählten Wert eingestellt sind/ist.

2. Verfahren nach Anspruch 1, wobei die Menge an Toner, die zu verwenden ist, mit einem Verfahren geschätzt wird, das die folgenden Schritte umfasst:
Bereitstellen von Bitmapping unterzogenen Daten, die dem Bild entsprechen, in Bitmap-Format;
Summieren (S2; S7) aller Bitwerte der Bitmapping unterzogenen Bilddaten; und
Schätzen der Menge an Toner, die zu verwenden ist, entsprechend den summierten Bitmapping unterzogenen Bilddaten.

3. Verfahren nach Anspruch 1 zum Erzeugen von Farbbildern aus einer Vielzahl farbiger Toner (14a-14d), wobei die zu verwendende Menge an Toner mit einem Verfahren geschätzt wird, das die folgenden Schritte umfasst:
für jeden der Vielzahl farbiger Toner Bereitstellen (2) von Bitmapping unterzogenen Daten, die dem Teil des Bildes entsprechen, der aus diesem farbigen Toner zu erzeugen ist, in Bitmap-Format;
Summieren (3; S2; S7) der Bitmapping unterzogenen Bilddaten für jeden der Vielzahl farbiger Toner, um summierte Bitmapping unterzogene Bilddaten für das gesamte Bild bereitzustellen; und
Schätzen einer Gesamtmenge an zu verwendendem Toner entsprechend den summierten Bitmap-Daten, wobei die Fixiertemperatur in Reaktion auf die Gesamtmenge auf einen Wert eingestellt wird.

4. Verfahren nach Anspruch 1 oder Anspruch 3 zum Erzeugen von Farbbildern aus einer Vielzahl farbiger Toner (14a-14d), wobei die zu verwendende Menge an Toner mit einem Verfahren geschätzt wird, das die folgenden Schritte umfasst:
für jeden der Vielzahl farbiger Toner Bereitstellen (2) von Bitmapping unterzogenen Bilddaten, die dem Teil des Bildes entsprechen, der aus diesem farbigen Toner zu erzeugen ist, in Bitmap-Format;
Summieren (3; S2; S7) der Bitmapping unterzogenen Bilddaten für jeden der Vielzahl farbiger Toner, um summierte Bitmapping unterzogene Bilddaten für jede Farbe für das gesamte Bild bereitzustellen; und
für jede Farbe Schätzen der zu verwenden Menge an jeweiligem Toner entsprechend den jeweiligen summierten Bitmap-Daten für jede Farbe; und
für jede Farbe Einstellen der Übertragungsspannung der Bilderzeugungsvorrichtung auf einen Wert in Reaktion auf die geschätzte Menge an jeweiligem Toner.

5. Verfahren nach einem der vorangehenden Ansprüche, wobei eine größere geschätzte zu verwendende Menge an Toner einen Anstieg der Fixiertemperatur der Bilderzeugungsvorrichtung verursacht.

6. Verfahren nach einem der vorangehenden Ansprüche, wobei eine größere geschätzte zu verwendende Menge an Toner einen Anstieg der Übertragungsspannung der Bilderzeugungsvorrichtung verursacht.

7. Verfahren nach einem der vorangehenden Ansprüche, wobei eine Tabelle in einem Speicher (5) erzeugt wird und die geschätzte zu verwendende Menge an Toner (A, B, C) verwendet wird, um auf einen entsprechenden Wert (a, b, c) des wenigstens einen Betriebsparameters zuzugreifen und ihn aus der Tabelle auszulesen.

8. Verfahren nach Anspruch 2, 3 oder 4 und jedem davon abhängigen Anspruch, wobei Bilddaten der Bilderzeugungsvorrichtung zugeführt werden (1) und durch eine Bildverarbeitungseinrichtung (2) in das Bitmap-Format umgewandelt werden.

9. Bilderzeugungsvorrichtung zum Erzeugen von Bildern unter Verwendung von Toner, die umfasst:
eine Einrichtung zum Bereitstellen von Bitmapping unterzogenen Bilddaten, die einem Bild entsprechen; und
eine Einrichtung (2, 3) zum Schätzen einer Menge an Toner, die bei der Erzeugung des Bildes zu verwenden ist, in Reaktion auf die Bilddaten, und
**gekennzeichnet durch**:
eine Einrichtung (7; 30) zum Auswählen eines Wertes für wenigstens eine Fixiertemperatur und/oder eine Übertragungsspannung der Bilderzeugungsvorrichtung in Reaktion auf die geschätzte Menge an Toner, die zu verwenden ist;
eine Einrichtung zum Einstellen der Fixiertemperatur und/oder der Übertragungsspannung auf den jeweiligen ausgewählten Wert; und
wobei die Vorrichtung so eingerichtet ist, dass sie die Bilddaten als das Bild mit der Fixiertemperatur und/oder der Übertragungsspannung druckt, die auf einen jeweiligen ausgewählten Wert eingestellt sind/ist.

10. Bilderzeugungsvorrichtung nach Anspruch 9, wobei das Bild auf einem Aufzeichnungsmedium (20) in Form eines Blattes erzeugt wird.

## Revendications

1. Procédé d'utilisation d'un dispositif de formation d'images destiné à former des images en utilisant du toner, comprenant les étapes consistant à :
fournir des données d'images en mode point correspondant à une image ; et
estimer (S1-S3 ; S6-S8) une quantité de toner devant être utilisée pour la formation de ladite image en fonction desdites données d'image ;
**caractérisé par**
la sélection d'une valeur (S5 ; S10) pour au moins une d'une température de fixage et/ou d'une tension de transfert du dispositif de formation d'images en fonction de la quantité estimée de toner devant être utilisée ;
définir la température de fixage et/ou la tension de transfert à ladite valeur sélectionnée respective ; et
imprimer les données d'image en tant que ladite image avec ladite température de fixage et/ou tension de transfert définie(s) à la valeur sélectionnée respective.

2. Procédé selon la revendication 1, dans lequel la quantité de toner devant être utilisée est estimée par un procédé comprenant les étapes consistant à :
fournir des données d'image en mode point correspondant à ladite image, au format bitmap ;
additionner (S2 ; S7) l'ensemble des valeurs de bits des données d'image en mode point ; et
estimer la quantité de toner devant être utilisée selon les données d'image en mode point additionnées.

3. Procédé selon la revendication 1 destiné à former des images couleur à partir d'une pluralité de toners colorés (14a-14d), dans lequel la quantité de toner devant être utilisée est estimée par un procédé comprenant les étapes consistant à :
prévoir (2), pour chacun de la pluralité de toners colorés, des données d'image en mode point correspondant à la partie de ladite image devant être formée à partir de ce toner coloré, au format bitmap ;
additionner (3 ; S2 ; S7) les données d'image en mode point pour chacun de la pluralité de toners colorés pour fournir des données d'image en mode point additionnées pour l'ensemble de ladite image ; et
estimer une quantité totale de toner devant être utilisée selon les données en mode point additionnées, la température de fixage étant définie à une valeur en fonction de ladite quantité totale.

4. Procédé selon la revendication 1 ou la revendication 3, destiné à former des images couleur à partir d'une pluralité de toners colorés (14a-14d), dans lequel la quantité de toner devant être utilisée est estimée par un procédé comprenant les étapes consistant à :
prévoir (2), pour chacun de la pluralité de toners colorés, des données d'image en mode point correspondant à la partie de ladite image devant être formée à partir de ce toner coloré, au format bitmap ;
additionner (3 ; S2 ; S7) les données d'image en mode point pour chacun de la pluralité de toners colorés pour fournir des données d'image en mode point additionnées pour chaque couleur de l'ensemble de ladite image ; et
estimer, pour chaque couleur, la quantité de toner respectif devant être utilisée selon les données en mode point additionnées respectives pour chaque couleur ; et
définir, pour chaque couleur, la tension de transfert dudit dispositif de formation d'images à une valeur en fonction de la quantité estimée de toner respectif.

5. Procédé selon l'une quelconque des revendications précédentes, dans lequel une augmentation de la quantité estimée de toner devant être utilisée entraîne une augmentation de la température de fixage du dispositif de formation d'images.

6. Procédé selon l'une quelconque des revendications précédentes, dans lequel une augmentation de la quantité estimée de toner devant être utilisée entraîne une augmentation de la tension de transfert du dispositif de formation d'image.

7. Procédé selon l'une quelconque des revendications précédentes, dans lequel une table est formée dans une mémoire (5), et la quantité estimée de toner devant être utilisée (A, B, C) est utilisée pour accéder et lire une valeur correspondante (a, b, c) de l'au moins un paramètre de fonctionnement à partir du tableau.

8. Procédé selon la revendication 2, 3 ou 4 et n'importe quelle revendication dépendante de celle-ci, dans lequel des données d'image sont fournies (1) au dispositif de formation d'images, et sont converties par un processeur d'image (2) au format bitmap.

9. Dispositif de formation d'images destiné à former des images en utilisant du toner, comprenant :
des moyens pour fournir des données d'image en mode point correspondant à une image ; et
des moyens (2, 3) pour estimer une quantité de toner devant être utilisée pour former ladite image en fonction desdites données d'image ; et **caractérisé par**
des moyens (7 ; 30) pour sélectionner une valeur pour au moins une d'une température de fixage et/ou d'une tension de transfert du dispositif de formation d'images en fonction de la quantité estimée de toner devant être utilisée ;
des moyens pour définir la température de fixage et/ou la tension de transfert à ladite valeur sélectionnée respective ; et
ledit dispositif est conçu pour imprimer les données d'image en tant que ladite image, avec ladite température de fixage et/ou tension de transfert définie(s) à une valeur sélectionnée respective.

10. Dispositif de formation d'image selon la revendication 9, dans lequel ladite image est formée sur un support enregistrable (10) sous la forme d'une feuille.
